# EUROPÄISCHE PATENTSCHRIFT

(11) **EP 3 115 700 B1**
(45) Veröffentlichungstag und Bekanntmachung des Hinweises auf die Patenterteilung: **26.08.2020**
(21) Anmeldenummer: 16177690.1
(22) Anmeldetag: 04.07.2016
(51) Int. Cl.: F24D 3/14, F24D 19/06, F24F 1/00

(54) **UNTERFLURKONVEKTOR**
UNDERFLOOR CONVECTOR
CONVECTEUR SOUTERRAIN

(30) Priorität: 07.07.2015 AT 505912015
(43) Veröffentlichungstag der Anmeldung: 11.01.2017
(73) Patentinhaber: Rettig ICC B.V., 6199 AA Maastricht-Airport (NL)
(72) Erfinder: Naumann, Jens, 08451 Crimmitschau (AT)
(74) Vertreter: Wildhack & Jellinek

(56) Entgegenhaltungen:
- EP-A2- 2 051 015
- EP-A2- 2 444 752
- DE-A1- 2 143 352
- DE-A1- 2 842 894
- DE-A1- 2 936 855
- DE-A1- 3 014 390
- DE-U1-202008 004 567
- DE-U1-202009 016 714
- GB-A- 2 440 204

## Beschreibung

Die Erfindung betrifft einen Unterflurkonvektor gemäß dem Oberbegriff des Anspruchs 1, weiters eine Konvektor-Anordnung mit einer Anzahl von Unterflurkonvektoren, weiters eine Fußbodenkonstruktion mit derartigen Unterflurkonvektoren sowie ein Verfahren zur Erstellung einer derartigen Fußbodenkonstruktion gemäß Anspruch

Unterflurkonvektoren und deren Funktionsweise sind seit langem bekannt. Derartige Unterflurkonvektoren werden zum Kühlen oder Erwärmen von Räumen verwendet, wobei die Raumluft angesaugt, über einen Wärmeübertrager geführt und danach wieder in den Raum abgegeben wird. Unterflurkonvektoren sind dabei im Fußbodenaufbau eingesetzt und die Luft tritt bodennah aus.

Die am Markt erhältlichen und aus dem Stand der Technik bekannten Unterflurkonvektoren besitzen Gehäuse aus Metall, insbesondere aus Aluminium oder einem kompaktem Polymermaterial. Dokument DE 284 2894 A1 zeigt einen derartigen Unterflurkonvektor mit den Merkmalen des Oberbegriffs des Anspruchs 1. Derartige Konstruktionen sind meist ausreichend stabil, baustellenseitig allerdings umständlicher zu handhaben und beim Einbau, insbesondere beim Niveauausgleich mit dem Fußbodenaufbau, beispielsweise dem Estrich, ergeben sich oft praktische Schwierigkeiten. Diese entstehen primär dadurch, dass die Form sowie Dimensionen der Konvektorgehäuse fix vorgegeben sind und es nicht vorgesehen bzw. nicht leicht möglich ist, dass daran baustellenseitig etwas geändert wird. Anpassungen, beispielsweise ans Niveau des Estrichs, können dementsprechend nicht am Konvektor selbst, sondern müssen durch bauliche Maßnahmen am Fußboden vorgenommen werden, womit der Handlungsspielraum stark eingeschränkt ist. Dasselbe gilt für Änderungen der Längendimensionen eines Konvektors sowie für das kombinierte Anordnen und Zusammenschalten mehrerer Unterflurkonvektoren nebeneinander.

Aufgabe der vorliegenden Erfindung ist es somit, einen Unterflurkonvektor zu schaffen, der die Vorteile bekannter Unterflurkonvektoren aufweist, die angeführten Probleme aber vermeidet und der eine erhöhte Flexibilität beim Einbau ermöglicht.

Diese Vorteile werden bei einem Unterflurkonvektor der eingangserwähnten Art durch die kennzeichnenden Merkmale des Anspruchs 1 gelöst. Dabei ist erfindungsgemäß vorgesehen, dass das Konvektorgehäuse aus geschäumtem Polymermaterial bzw. Polymerschaumstoff besteht.

Dadurch ist vorteilhafterweise gewährleistet, dass das Konvektorgehäuse einerseits sehr leicht, aber dennoch sehr stabil und ausreichend trittsicher ist. Außerdem besitzt ein derartiges Konvektorgehäuse aus geschäumtem Polymermaterial ausgezeichnete Wärmedämmeigenschaften, was gerade im Bereich der Klimatechnik vorteilhaft ist. Darüber hinaus ist es bei einem derartigen Unterflurkonvektor möglich, baustellenseitig ohne großen Aufwand konstruktive Änderungen und Anpassungen am Gehäuse selbst vorzunehmen, um dieses beispielsweise besser in den Fußbodenaufbau einzupassen. So ist es bei einem erfindungsgemäßen Unterflurkonvektor beispielsweise problemlos möglich, die Höhen der Seitenwände auf die gewünschte Länge zurückzuschneiden, um einen bündigen Einbau mit dem Fußboden zu erreichen. Auch ist es möglich, die Länge des Konvektorgehäuses rasch und einfach anzupassen. Durch die Beschaffenheit des geschäumten Polymermaterials können auch mehrere derartige Konvektorgehäuse leicht und einfach aneinander befestigt werden, beispielsweise durch einfache Klammerelemente, die ins Material händisch eingedrückt werden können. Für all diese Tätigkeiten werden keine aufwändigen Werkzeuge, wie beispielsweise Trennscheiben benötigt, sondern ein scharfes Messer oder eine Feinsäge ist in der Regel völlig ausreichend.

Vorteilhafte Weiterentwicklungen und Ausführungsformen des Unterflurkonvektors werden durch die nachfolgenden Merkmale der abhängigen Ansprüche charakterisiert:
So ist ein Z erfindungsgemäßer Unterflurkonvektor dadurch gekennzeichnet, dass das Konvektorgehäuse im wesentlichen quader- kanal-, schalen- oder schachtförmig ist und eine Bodenfläche sowie zwei zueinander parallele Längsseitenwände aufweist. Eine derartige konstruktive Ausgestaltung bietet Vorteile bei der Herstellung, der Lagerung und für die Funktionsweise.

In diesem Zusammenhang ist es erfindungsgemäß vorgesehen, dass das Konvektorgehäuse an seiner Oberseite durch ein luftdurchlässiges, vorzugsweise abnehmbares, trittsicheres Gitterelement bzw. einen Rost abgedeckt ist. Dieses ist vorteilhafterweise aus einem anderen Material, beispielsweise aus Holz oder Metall.

Weiters ist es vorteilhaft, wenn zwei zueinander parallele, das Konvektorgehäuse stirnseitig abschließende, Stirnseitenwände vorgesehen sind, die reversibel einsetzbar bzw. entfernbar sind. Auf diese Weise ist es möglich, eine größere Flexibilität beim Einbau zu erzielen. So können beispielsweise zwei Konvektorgehäuse stirnseitig durch gleichzeitiges Entfernen von jeweils einer Stirnseitenwand aneinander gekoppelt werden, um einen längeren durchgehenden Konvektorkanal zu schaffen. Andererseits ist es auch sehr einfach möglich, ein Konvektorgehäuse durch Einbringen von zwei Stirnseitenwänden zu einem fertigen Unterflurkonvektor zu assemblieren. Derartige Stirnseitenwände werden dabei vorteilhafterweise durch Einschieben von oben insbesondere in dafür vorgesehene Nuten zur Sicherung des seitlichen Haltes angeordnet.

Um eine optimale Anströmung und Luftzirkulation zu ermöglichen, ist vorteilhafterweise vorgesehen, dass die Bodenfläche im Bereich unterhalb des Wärmeübertragers einen nach außen zu der dem Wärmeübertrager nahen Längsseitenwand hin ansteigend geneigten bzw. abgeschrägten Flächenbereich aufweist. Dabei ist der Kanal vorteilhafterweise so ausgeformt, dass sowohl der Wärmeübertrager als auch das Gebläse das gesamte Kanalsegment des Konvektorgehäuses übergreifen oder dort wirken.

In diesem Zusammenhang ist es besonders vorteilhaft, wenn vorgesehen ist, dass sich der Flächenbereich ausgehend von der dem Wärmeübertrager nahen Längsseitenwand bis maximal 30 %, vorzugsweise in einen Bereich zwischen 10 und 25 %, der inneren Breite des Konvektorgehäuses erstreckt.

Eine vorteilhafte Luftströmung wird in diesem Zusammenhang dadurch erreicht, wenn der geneigte Flächenbereich um einen Winkel von 5 bis 15° zur Bodenfläche geneigt ist.

Um eine gute und stabile Aufnahme und Fixierung der einzelnen Komponenten, insbesondere des Wärmeübertragers zu gewährleisten, ist vorteilhafterweise vorgesehen, dass in der Bodenfläche im Bereich unterhalb des Wärmeübertragers eine Anzahl von quer zu den Längsseitenwänden ausgerichteten Rippen ausgebildet ist, auf denen der Wärmeübertrager aufgesetzt ist bzw. aufliegt. Dadurch wird außerdem unterhalb des Wärmeübertragers ein freier Bereich ausgebildet, der für die Luftzirkulation vorteilhaft ist.

Eine in diesem Zusammenhang konstruktiv vorteilhafte Ausführungsform sieht vor, dass sich die Rippen ausgehend von der dem Wärmeübertrager nahen Längsseitenwand bis maximal 95 %, vorzugsweise in einen Bereich zwischen 40 und 70 %, der inneren Breite des Konvektorgehäuses erstrecken und den abgeschrägten Flächenbereich überragen. Dadurch ergibt sich eine gute Stabilität kombiniert mit einer vorteilhaften Luftzirkulation. Die Rippen erstrecken sich nicht über die gesamte innere Breite des Wärmeübertragers, um im unteren Bereich des Konvektorgehäuses eine Unterteilung in voneinander getrennte Abschnitte zu vermeiden und damit die Möglichkeit der besseren Entwässerbarkeit z.B. von Spritzwasser oder Kondensat zu haben.

Auch in anderen Bereichen des Konvektorgehäuses können weitere Rippen bzw. Rippenelemente ausgebildet sein, beispielsweise neben und/oder unterhalb des Gebläses und/oder an der Längsseitenwand neben dem Gebläse.
So können vorteilhafterweise im Innenbereich bzw. Innenraum des Konvektorgehäuses vertikal ausgerichtete Rippenelemente vorgesehen sein, die in den Innenraum gerückt und von der Längsseitenwand beabstandet sind. Diese bewirken eine stabile und sichere Lagerung und seitliche Fixierung des Gebläses und eine Beabstandung des Gebläses vom Wärmeübertrager. Diese Rippenelemente erstrecken sich vorteilhafterweise von der Bodenfläche bis in eine Höhe von etwa den Rastflächen. Die Rippenelemente können in Luftstromrichtung strömungstechnisch günstig ausgeformt sein z.B. in Tropfenform, um eine möglichst gleichmäßige und komplette Anströmung des Wärmeübertragers zu erreichen. Auch im Bereich unterhalb des Gebläses können weitere horizontale Rippenelemente angeordnet sein.

Derartige Rippen dienen zudem auch als zusätzliche Stabilisierungselemente und erhöhen die strukturelle Integrität und Steifigkeit des Konvektorgehäuses sowohl bei der Lagerung und beim Transport als auch während des Einbaus und im fertigen Fußbodenaufbau.

Für den Einbau und einen sicheren Halt im Fußboden ist es vorteilhaft, wenn an den Außenseiten der Längsseitenwände in der Verlängerung der Bodenfläche nach außen, jeweils ein länglicher Sicherungsflansch ausgebildet bzw. angeformt ist. Auf diese Weise kann ein Aufschwimmen beim Einbau im Estrich verhindert werden.
Alternativ können die Außenseiten der Längsseitenwände auch frei von einem solchen Sicherungsflansch gehalten werden. Dadurch wird die Konstruktion konstruktiv einfacher und kostengünstiger in der Herstellung, das Konvektorgehäuse wird in diesem Fall mit dem Untergrund, meist dem Rohfußboden, verklebt oder verschraubt.

Für den Einbau ist es vorteilhaft, wenn die der Bodenfläche abgewendete Unterseite Strukturelemente zum Ausgleich von Bodenunebenheiten, insbesondere Noppen, Streifen, Rippen etc, aufweist. Üblicherweise werden derartige Unterflurkonvektoren bzw. Konvektorgehäuse mittels Klebstoff oder Silikon auf dem Rohfußboden fixiert und auch untereinander abgedichtet. Eine strukturierte Unterseite, beispielsweise eine Rippen- oder Wabenstruktur bzw. spezielle Noppen mit Einkerbungen sorgen für einen besseren Ausgleich von Unebenheiten des Rohfußbodens bzw. erhöhen die Toleranz gegenüber Schmutzpartikeln auf dem Boden. Die Strukturelemente, insbesondere die Noppen oder Kerben sind dabei so ausgeformt, dass die Noppen bei Belastung bis zum bündigen Abschluss an der Kanalunterseite in die Einkerbungen ringsherum hineingedrückt werden können. Auf diese Weise liegt das Konvektorgehäuse planeben und wackelfrei auf der Unterlage auf.

Wenn eine durchgehende Rippen- oder Wabenstruktur an der Unterseite des Konvektorgehäuses vorgesehen ist, dient dies zusätzlich auch zur mechanischen Stabilitätserhöhung und zur Erhöhung der Steifigkeit des Konvektorgehäuses, womit außerdem auch ein geringerer Materialeinsatz erforderlich wird.

Für den Einbau ist es weiters vorteilhaft, wenn an den obersten Kanten der Längsseitenwände und/oder an den obersten Kanten der Stirnseitenwände Abschlussprofile mit nach innen und/oder nach außen vorstehenden Flanschleisten bzw. Auflageflächen, vorzugsweise aus Metall, insbesondere zum Auflegen eines Gitterelements bzw. eines Rosts, vorgesehen sind, wobei die Abschlussprofile vorzugsweise in Form eines Z-Profils ausgestaltet sind. Auf den nach innen weisenden Flanschleisten der Abschlussprofile werden die luftdurchlässigen Gitter zum Austritt der erwärmten oder gekühlten Luft aufgelegt. Über die nach außen vorstehenden Flanschleisten wird der Unterflurkonvektor beispielsweise über Verschraubungen, Klemmfedern oder Verklebungen mit dem Fußbodenaufbau verbunden.

Eine vorteilhafte Ausführungsform sieht vor, dass ein Blockelement vorgesehen ist, das die Form und Dimensionen der Innenkontur des Konvektorgehäuses aufweist und das ins Konvektorgehäuse passsitzig und reversibel einsetzbar ist und zumindest einen Teil des inneren Raumes des Konvektorgehäuses ausfüllt. Das Blockelement ist dabei das konstruktive Gegenstück zur Innenkontur des Innenraums des Konvektorgehäuses und ist reversibel darin einsetzbar und wieder entfernbar. Das Blockelement dient primär als Transport und Baustellenschutz für die Konvektorgehäuse und verhindert beispielsweise ein seitliches Eindrücken der Längs- und/oder Stirnseitenwände oder ein Abschlagen oder Eindrücken der Ecken und Kanten. Das Blockelement ist vorteilhafterweise aus dem gleichen Material gefertigt wie das Konvektorgehäuse, insbesondere aus EPS. Das Blockelement kann aber auch aus einem Material geringerer Festigkeit bestehen. Das Blockelement verbleibt zumeist bis fast zum Schluss der Einbauarbeiten im Konvektorgehäuse und wird erst entfernt, wenn der Einbau abgeschlossen ist und nur noch der Wärmeübertrager und/oder das Gebläse eingesetzt wird.

In diesem Zusammenhang ist es vorteilhaft, wenn die inneren Flächen der Längsseitenwände geringfügig abgeschrägt sind, vorzugsweise in einem Winkel von 0,5° bis 5°. Auf diese Weise kann das Blockelement leichter entnommen bzw. nach oben herausgezogen werden, wenn das Konvektorgehäuse bereits in den Bodenaufbau eingearbeitet ist.

Weiters ist es vorteilhaft, wenn an den Innenflächen der Längsseitenwände jeweils eine parallel zur Bodenfläche verlaufende, und gegebenenfalls nach unten geneigte, Rastfläche ausgebildet ist, oberhalb der die Dicke der Längsseitenwände um die Breite der Rastfläche verringert ist. Die Rastfläche dient dabei einerseits auch als Auflagefläche für das Blockelement, weiters erhöht sich dadurch die Stabilität der Längsseitenwände. Vorteilhafterweise sind dementsprechend die Längsseitenwände im oberen Bereich dünner ausgebildet, insbesondere damit die Abschlussprofile für die begehbare Abdeckung möglichst überwiegend auf dem Boden aufliegen und nicht auf dem Unterflurkonvektor bzw. den Längsseitenwänden selbst, womit die Gefahr einer Durchbiegung bzw. eines Eindrückens des Materials verringert wird.

Um die eingangs erwähnten Vorteile besonders auszuprägen, ist es vorteilhaft, wenn der Polymerschaumstoff ein Styrolpolymer-Partikelschaumstoff (EPS) oder ein extrudierter Polystyrol-Hartschaum (XPS) ist, und vorzugsweise eine Dichte von > 35 kg/m³ aufweist.

Um eine sehr einfache Herstellbarkeit bei gleichzeitig hoher Stabilität zu erreichen, ist erfindungsgemäß vorgesehen, dass das Konvektorgehäuse, zumindest umfassend die Bodenfläche sowie die Längsseitenwände, einstückig und einteilig ausgebildet ist. Dies lässt sich vor allem bei Partikelschaumstoffen gut über die Form, in der die Polymerisate aufgeschäumt werden, bewerkstelligen.

Die Funktionsweise des erfindungsgemäßen Unterflurkonvektors wird vorteilhafterweise erhöht, wenn im Inneren des Konvektorgehäuses ein Gebläse zur Ansaugung von Luft und/oder zum forcierten Einbringen von vom Wärmeübertrager erwärmter oder gekühlter Luft in den Raum vorgesehen ist. Auch das Gebläse kann, wie erwähnt, auf Rippen angeordnet oder über Rippen vom Wärmeübertrager und/oder von der Längsseitenwand beabstandet sein.

Weiters ist erfindungsgemäß eine Konvektoranordnung umfassend eine Anzahl von nebeneinander, insbesondere stirnseitig aneinander angeordneten Unterflurkonvektoren vorgesehen.

In diesem Zusammenhang ist es besonders vorteilhaft, wenn zur stirnseitigen mechanischen Verbindung zweier erfindungsgemäßer Unterflurkonvektoren Verbindungselemente, vorzugsweise Einrastelemente oder Halteklammern, vorgesehen sind, die insbesondere in dafür in den Innenwandungen des Konvektorgehäuses ausgebildete Ausnehmungen einsetzbar sind. Die Einrastelemente können dabei beispielsweise in extra dafür vorgesehene Nuten eingesetzt werden. Wenn die Einrastelemente symmetrisch aufgebaut sind, können diese dabei beidseitig verwendet werden. Die Montage dieser Einrastelemente erfolgt dabei reversibel durch Eindrücken und die Einrastelemente können auch ohne Beschädigungen am Konvektorgehäuse bei der Demontage wieder entfernt werden. Zur Verbindung manuell gekürzter Konvektorgehäuse miteinander sind auch speziell geformte Halteklammern mit ins Material eingreifende Zahnungen vorteilhaft.

Um Eckverbindungen zu gewährleisten, ist es vorteilhaft, wenn Eckverbindungselemente vorgesehen sind, mit denen zwei erfindungsgemäße Unterflurkonvektoren miteinander in einem, vorzugsweise rechten, Winkel stirnseitig verbindbar sind, wobei die Eckverbindungselemente an ihren Stirnseiten die gleichen Querschnitte und Dimensionen wie die Konvektorgehäuse besitzen. In diesen Eckverbindungselementen sind in der Regel keine Wärmeübertrager oder Gebläse angeordnet und diese dienen in der Regel nur zur funktionellen und mechanisch stabilen Verbindung zweier Unterflurkonvektoren. Die Eck- oder auch Bogenelemente können in verschiedenen Winkeln und Radien ausgeführt sein, wobei ein Systemraster z.B. 30° oder 45° sinnvoll ist.

Weiters ist erfindungsgemäß eine Fußbodenkonstruktion vorgesehen, umfassend einen Fußbodenaufbau, beispielsweise einen Estrich oder Unterbau, weiters einen Bodenbelag, beispielsweise einen Parkett, und zumindest einen erfindungsgemäßen Unterflurkonvektor, wobei der zumindest eine Unterflurkonvektor im Fußbodenaufbau eingesetzt ist und wobei die obersten Kanten der Längsseitenwände so abgelängt bzw. zurechtgeschnitten sind, dass der Unterflurkonvektor bündig mit der Oberfläche des Fußbodens bzw. des Bodenbelags abschließt. Alternativ kann der Unterflurkonvektor auch unterhalb des Bodenbelags abschließen, um übliche Rahmenkonstruktionen, z.B. Z-Rahmen, zur Aufnahme der Gitter- bzw. Rollroste verwenden zu können.

Dies geschieht vorteilhafterweise durch ein erfindungsgemäßes Verfahren zum Einbau eines erfindungsgemäßen Unterflurkonvektors, insbesondere einer erfindungsgemäßen Konvektor-Anordnung, bzw. durch ein Verfahren zur Erstellung einer erfindungsgemäßen Fußbodenkonstruktion, wobei nach dem Anordnen eines erfindungsgemäßen Unterflurkonvektors im Fußbodenaufbau und vor dem Einbringen des Bodenbelags, die obersten Kanten des Unterflurkonvektors in der passenden Höhe so abgelängt werden, dass der Unterflurkonvektor bündig mit oder unterhalb der Oberfläche des Fußbodens bzw. des Bodenbelags abschließt. Vorteilhafterweise ist erst abschließend vorgesehen, dass danach das Blockelement entfernt wird und/oder die Abschlussprofile montiert werden. Zur leichten und einfacheren Einkürzbarkeit der Längsseitenwände können an den Außenseiten Markierungen vorgesehen sein.

In den nachfolgenden Figuren werden einige beispielhafte und nicht einschränkend zu verstehende Ausführungsbeispiele beschrieben:
Fig. 1 zeigt eine Ausführungsform eines erfindungsgemäßen Konvektorgehäuses in perspektivischer Ansicht.
Fig. 2 zeigt das Konvektorgehäuse in Seitenansicht.
Fig. 3 zeigt einen Unterflurkonvektor bzw. das Konvektorgehäuse mit eingesetzten Komponenten.
Fig. 4 zeigt eine Explosionsdarstellung der Bauteile des Unterflurkonvektors.
Fig. 5 zeigt einen Ausschnitt einer Konvektoranordnung bzw.
Fußbodenkonstruktion.
Fig. 6 zeigt eine weitere Darstellung einer Konvektoranordnung bzw. Fußbodenkonstruktion.
Fig. 7 zeigt eine Halteklammer in perspektivischer Ansicht.
Fig. 8 zeigt eine weitere Ausführungsform einer Halteklammer.
Fig. 9 zeigt einen Ausschnitt einer Konvektoranordnung im Bereich der Stoßstelle.
Fig. 10 zeigt eine Draufsicht auf einen derartigen Bereich.
Fig. 11 zeigt einen Querschnitt einer Fußbodenkonstruktion in einem Zwischenstadium.
Fig. 12 zeigt eine Fußbodenkonstruktion in einem weiter fortgeschrittenem Stadium.

Die Fig. 13 bis 16 zeigen eine alternative Ausführungsform analog zu den Fig. 1, 2, 3 und 5.

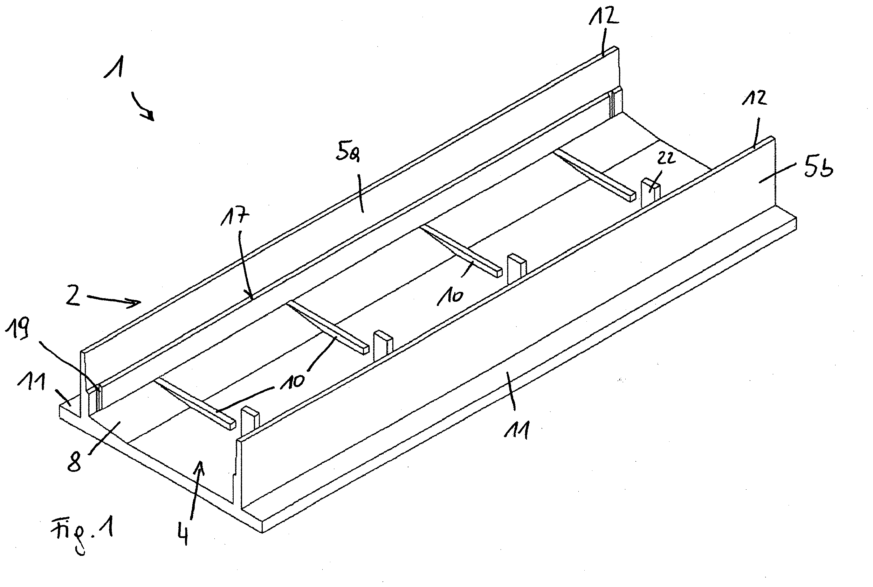

In Fig. 1 ist ein Konvektorgehäuse 2 eines erfindungsgemäßen Unterflurkonvektors 1 in perspektivischer Ansicht dargestellt. Das Konvektorgehäuse 2 besteht aus geschäumtem EPS (expandiertes Polystyrol), und ist einteilig bzw. einstückig aufgebaut, besitzt also keine Verklebungen oder Schweißnähte. Hergestellt wird ein derartiger Formkörper auf übliche Art und Weise, indem EPS-Partikel zunächst vorgeschäumt werden und dann in einer Form vollständig expandiert werden, wobei sich die EPS-Partikel zum finalen Schaumkörper verkleben.

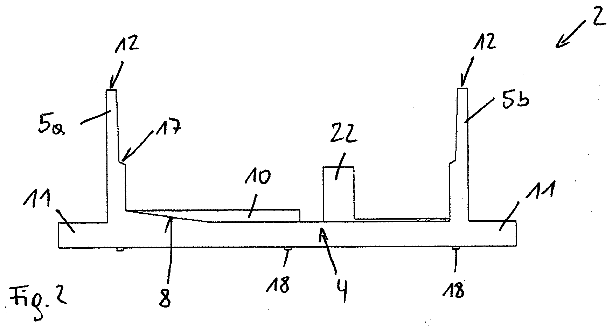

Das Konvektorgehäuse 2 ist im Wesentlichen quader- bzw. kanalförmig und besitzt eine Bodenfläche 4 sowie zwei zueinander parallele Längsseitenwände 5a, 5b. Stirnseitig ist das Konvektorgehäuse 2 offen, es besteht aber die Möglichkeit, an diesen Stellen abschließende Stirnseitenwände 6 einzusetzen, um den Innenraum des Konvektorgehäuses 2 abzugrenzen. Die Längsseitenwände 5a, 5b sowie allfällige Stirnseitenwände 6 sind im rechten Winkel zur Bodenfläche 5 angeordnet. Wie in Fig. 2 erkennbar, sind die Längsseitenwände 5a, 5b in ihrem unteren Bereich dicker und in ihrem oberen Bereich dünner. In etwa der Mitte der Längsseitenwände 5a, 5b verläuft auf der dem Innenraum zugewendeten Fläche jeweils eine parallel zur Bodenfläche 4 ausgerichtete schräg abfallend nach unten geneigte Rastfläche 17. Ausgehend von der Bodenfläche 4 ist die Innenfläche der Längsseitenwände 5a, 5b parallel zur Außenfläche ausgerichtet. Ab der Rastfläche 17 sind die inneren Flächen dann nicht mehr vertikal, sondern sind geringfügig abgeschrägt und öffnen sich nach oben, vorliegend in einem Winkel von etwa 4°, wodurch die lichte innere Breite im obersten Bereich geringfügig größer als im weiter unten liegenden Bereich ist. Dies dient unter anderem auch für die bessere Herausziehbarkeit eines Blockelements 16, wie später noch näher beschrieben wird.

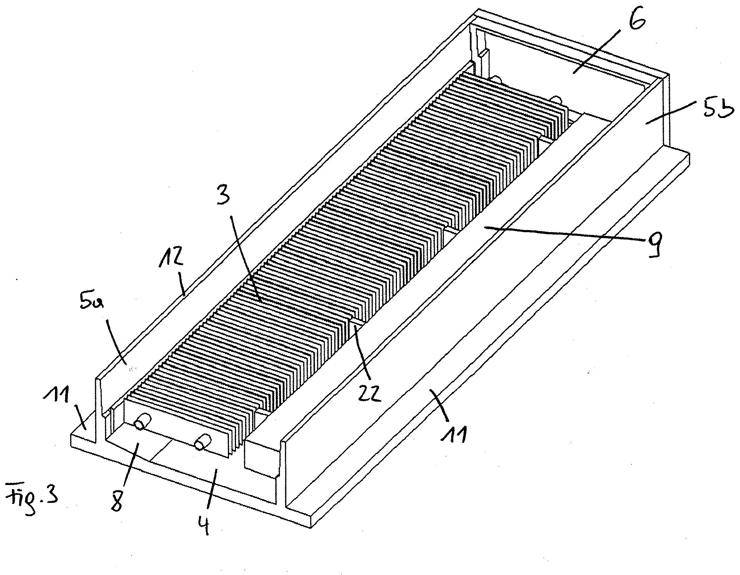

In Fig. 3 ist ein Unterflurkonvektor 1 mit einem bereits eingesetzten Wärmeübertrager 3 und einem Gebläse 9 dargestellt. Darüber hinaus ist eine Stirnseitenwand 6 vorgesehen, die das Konvektorgehäuse 2 einseitig abschließt.

Im Bereich unterhalb des Wärmeübertragers 3 weist die Bodenfläche 4 einen nach außen zur dem Wärmeübertrager 3 nahen Längsseitenwand 5a hin ansteigend geneigten bzw. abgeschrägten Flächenbereich 8 auf. Dies dient zur Verbesserung der Luftzirkulation. Dieser Flächenbereich 8 erstreckt sich ausgehend von der Längsseitenwand 5 bis etwa 30 % der inneren Breite des Konvektorgehäuses 2, entsprechend etwa bis ca. 40 % der Breite des Wärmeübertragers 3. Dieser Flächenbereich 8 ist in einem Winkel von etwa 5° bis 10° zur Bodenfläche 4 geneigt.

Im selben Bereich, also im Bereich unterhalb des Wärmeübertragers 3, ist weiters eine Anzahl von quer zur den Längsseitenwänden 5a, 5b ausgerichteten Rippen 10 angeordnet bzw. ausgebildet. Auf diesen Rippen 10 ist der Wärmeübertrager 3 aufgesetzt und liegt dort stabil auf. In den Zwischenbereichen zwischen den Rippen 10 sind Räume für die Luftzirkulation vorgesehen. Die Rippen 10 gehen dabei von der dem Wärmeübertrager 3 nahen Längsseitenwand 5a aus, und zwar genau von dem Punkt bzw. von der Höhe, an dem/der der Flächenbereich 8 an die Längsseitenwand 5a anstößt. Die Rippen 10 erstrecken sich ausgehend von dieser Längsseitenwand 5a bis zu etwa 50 % der inneren Breite des Konvektorgehäuses 2 und überragen den abgeschrägten Flächenbereich 8 um etwa das Doppelte. Dabei vergrößert sich im Bereich des Flächenbereichs 8 die Höhe der Rippen 10 zunächst kontinuierlich und bleibt dann im Bereich der horizontalen bzw. ebenen Bodenfläche 4 konstant. Die Oberseiten der Rippen 10 sind dabei im Wesentlichen parallel zur Bodenfläche 4 ausgerichtet.

An den Außenseiten der Längsseitenwände 5a, b, und zwar in der Verlängerung der Bodenfläche 4 nach außen ist auf beiden Seiten jeweils ein länglicher Sicherungsflansch 11 angeformt bzw. ausgebildet, der sich über die gesamte Länge des Konvektorgehäuses 2 erstreckt. Dieser dient zur Sicherung gegen Aufschwimmen im Estrich und zur besseren Verankerung in der Fußbodenkonstruktion.

Im Innenbereich bzw. Innenraum des Konvektorgehäuses 2 können auch noch weitere Rippen bzw. Rippenelemente 22 vorgesehen sein. Bei der hier beschriebenen Ausführungsform sind zusätzlich vertikal ausgerichtete, quaderförmige Rippenelemente 22 vorgesehen. Diese sind in den Innenraum gerückt und von der Längsseitenwand 5b beabstandet und bewirken eine stabile und sichere Lagerung und seitliche Fixierung des Gebläses 9 und eine Beabstandung des Gebläses 9 vom Wärmeübertrager 3. Diese Rippenelemente 22 erstrecken sich in eine Höhe von der Bodenfläche 4 bis etwa zu den Rastflächen 17.
Die Ausgestaltung dieser zusätzlichen Rippenelemente 22 ist flexibel und diese dienen einerseits zur Erhöhung der strukturellen Integrität und Stabilität des Konvektorgehäuses 2 als auch zur Sicherung und Lagefixierung der funktionellen Bestandteile wie beispielsweise des Wärmeübertragers 3, des Gebläses 9 oder dergleichen. Auch hier besteht durch das Material die Möglichkeit der einfachen und raschen Anpassung an die realen Bedürfnisse.

Auf der der Bodenfläche 4 abgewendeten Unterseite sind, wie in Fig. 2 erkennbar, Erhebungen bzw. Strukturelemente 18 vorgesehen. Diese dienen zum Ausgleich von Bodenunebenheiten und zur Sicherung eines besseren und wackelfreien Halts.

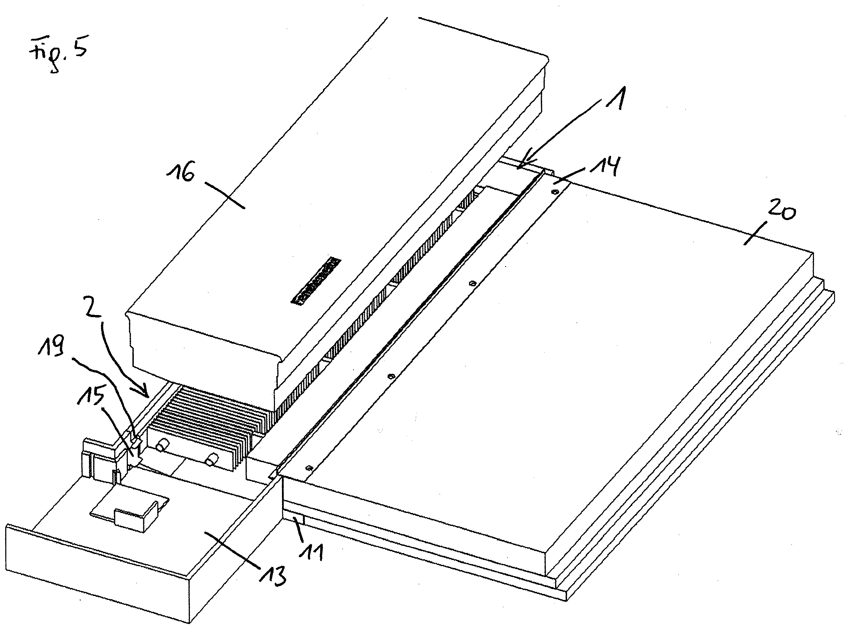

Die Längsseitenwände 5a, 5b weisen obere Kanten 12 auf. Analog besitzen auch die Stirnseitenwände 6 obere Kanten 12'. Auf diese Kanten 12, 12' werden separate Abschlussprofile 14 befestigt, wie dies beispielsweise in Fig. 5 zu erkennen ist. Diese Abschlussprofile 14 weisen beispielsweise die Form eines Z-Profils auf und besitzen nach innen und nach außen vorstehende Flanschleisten bzw. Auflageflächen. Auf die nach innen vorstehenden, meist horizontal ausgerichteten Flanschleisten wird ein luftdurchlässiges Gitterelement bzw. ein Rost 7 aufgelegt (hier nicht dargestellt). Die nach außen vorstehenden Flanschleisten weisen, wie in Fig. 5 erkennbar, Bohrlöcher auf, um diese am Bodenaufbau 20 durch Verschraubungen zu fixieren. Des weiteren können auch handelsübliche Z-Rahmen-Konstruktionen, welche üblicherweise auf dem Fertigfußboden aufgesetzt werden in Verbindung mit dem Konvektorgehäuse 2 verwendet bzw. kombiniert werden. Dadurch wird der Anwendungsbereich erweitert und gegebenenfalls die Montage weiter vereinfacht.

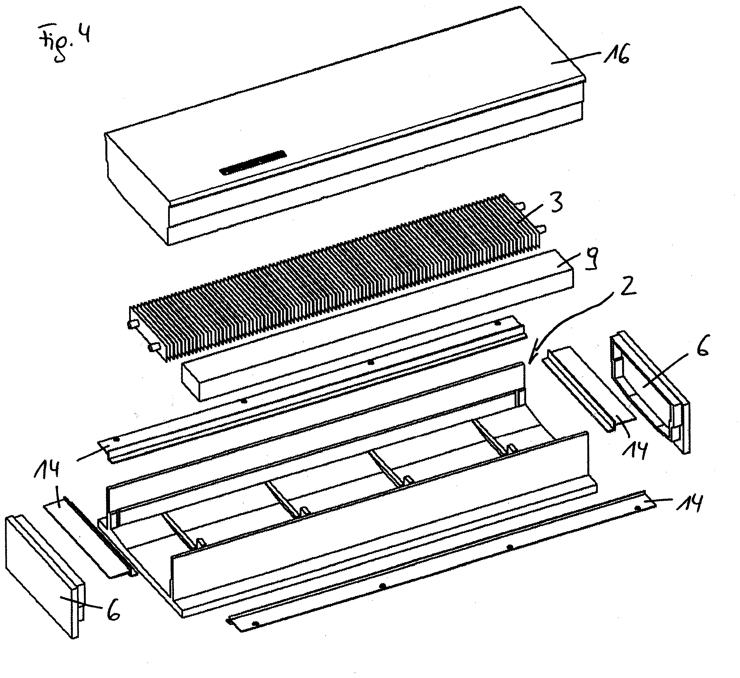

In Fig. 4 ist eine Explosionsdarstellung der wichtigsten Komponenten eines Unterflurkonvektors 1 dargestellt, inklusive Konvektorgehäuse 2, Abschlussprofile 14, Stirnseitenwände 6 sowie der funktionellen Komponenten, u.a. des Wärmeübertragers 3 und des Gebläses 9. Weiters ist auch das Blockelement 16 dargestellt, das, wie erkennbar, ein Gegenstück bzw. eine zur Innenkontur des Konvektorgehäuses 2 komplementäre Form aufweist. Das Blockelement 16 ist passsitzig und reversibel in den inneren Raum des Konvektorgehäuses 2 einsetzbar und dient als Lager- und Transportschutz.

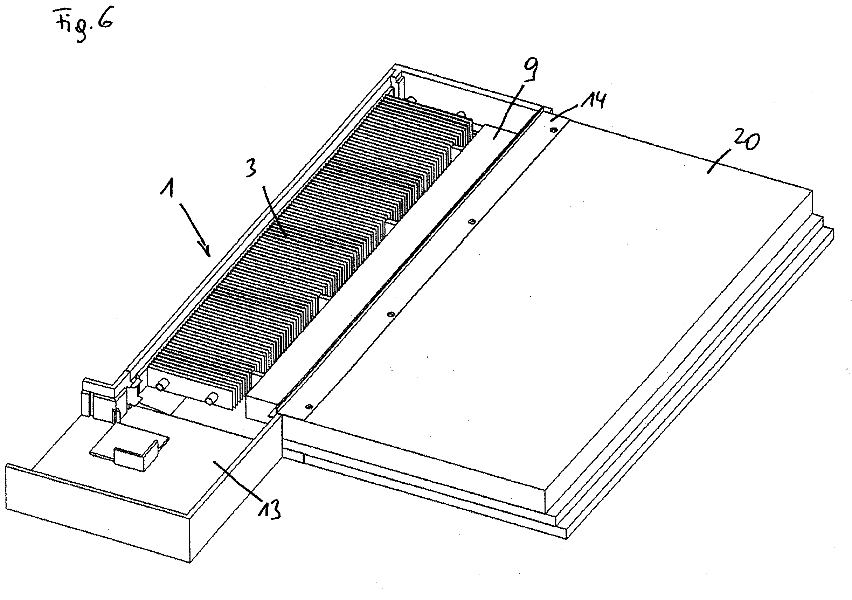

In den Fig. 5 und 6 ist ein Teil einer erfindungsgemäßen Fußbodenkonstruktion dargestellt. Bei dieser Ausführungsform ist ein Unterflurkonvektor 1 mit einem Eckverbindungselement 13 verbunden. Das Eckverbindungselement 13 weist dabei stirnseitig die gleichen Querschnitte und Dimensionen wie das Konvektorgehäuse 2 auf, womit eine Verlängerung des Kanals und gleichzeitig eine Umlenkung um einen Winkel, der im vorliegenden Fall 90° beträgt, bewirkt wird. Die stirnseitige Verbindung erfolgt über Einrastelemente, die im vorliegenden Fall als Halteklammern 15 ausgestaltet sind. Diese sind in an den Innenwandungen des Konvektorgehäuses 2 und/oder des Eckverbindungselements 13 ausgebildeten Nuten bzw. Ausnehmungen 19 einsetzbar. Die Haltklammern 15 können dabei reversibel entfernt werden.

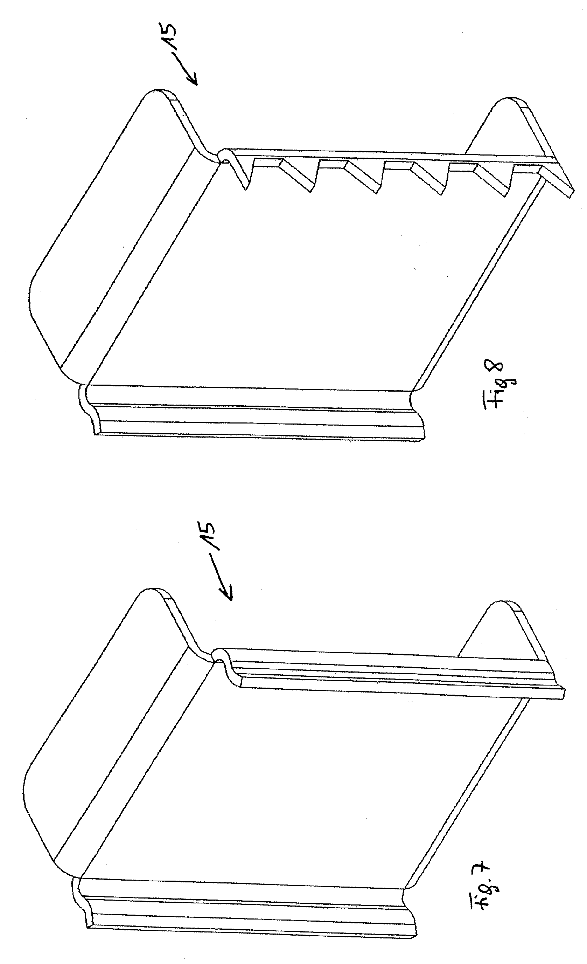

In Fig. 7 ist eine derartige Halteklammer 15 in Großaufnahme dargestellt. Erkennbar sind die zwei symmetrisch angeordneten Halteflansche, mit denen die Halteklammern 15 in die Nuten bzw. Ausnehmungen 19 gegebenenfalls über Hinterschneidungen einsetzbar sind. Auf den gegenüberliegenden Seiten sind auf den jeweils anderen Kanten Flanschflächen angeformt, über die der manuelle Zugriff bei der Montage oder Demontage gewährleistet ist.

In Fig. 8 ist eine alternative Ausführungsform vorgesehen, wobei diese Variante auf einer der Kanten anstatt eines Halteflansches über eine Serie an Verzahnungselementen bzw. Spitzen verfügt. Diese Ausführungsform dient vor allem für manuell eingekürzte Konvektorgehäuse 2, wobei die Verzahnungen ins EPS-Material eingedrückt werden können und so fixierbar sind.

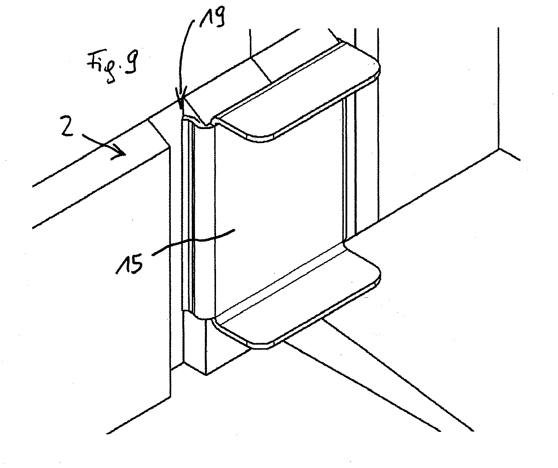

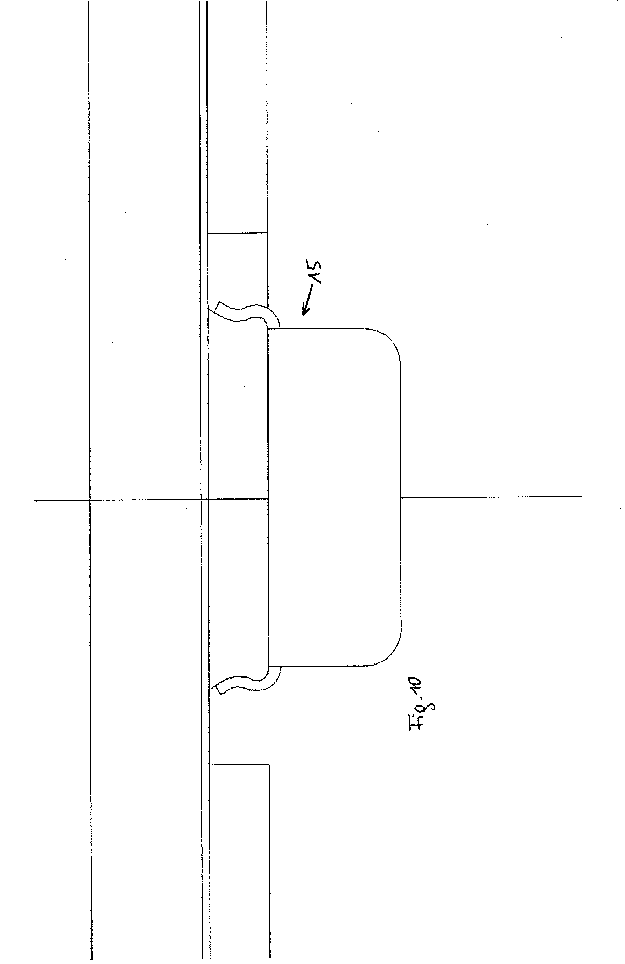

In Fig. 9 und 10 ist das Prinzip der Halteklammer von Fig. 7 näher beschrieben und es ist erkennbar, wie die Halteflansche als Einrastelemente agieren und die beiden stirnseitig angeordneten Konvektorgehäuse 2 bzw. ein Konvektorgehäuse 2 mit einem Eckverbindungselement 13 dicht und stabil aneinander koppeln.

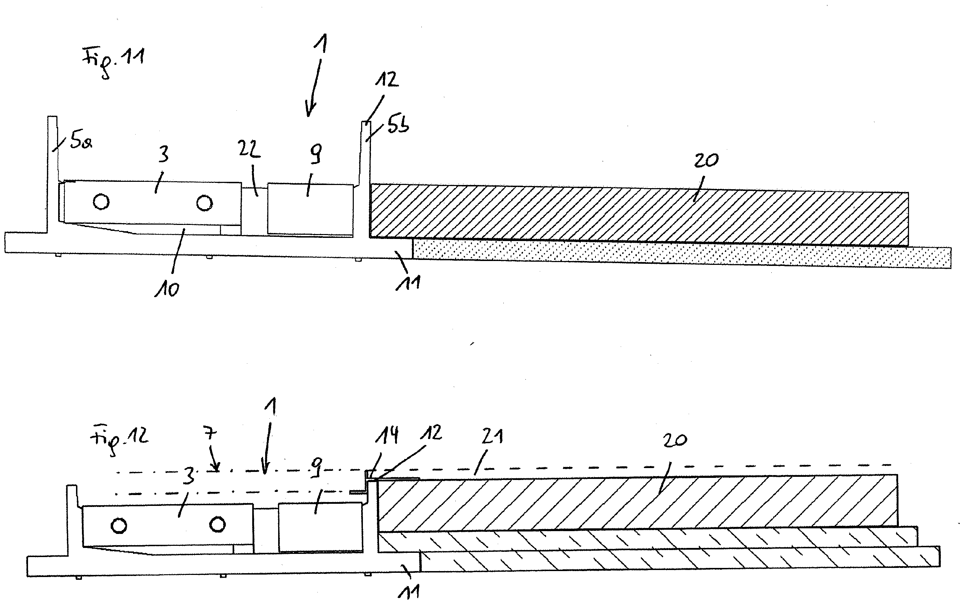

In Fig. 11 ist eine erfindungsgemäße Fußbodenkonstruktion im Querschnitt dargestellt. Hierbei handelt es sich um eine Darstellung eines verfahrensmäßigen Zwischenschrittes, bei dem der Fußbodenaufbau 20, also die Dämmung und der Estrich bereits vorhanden sind, der Bodenbelag 21, beispielsweise der Parkettboden, allerdings noch nicht. Auf der linken Seite ist der Unterflurkonvektor 1 dargestellt, in dem bereits der Wärmeübertrager 3 und das Gebläse 9 eingesetzt sind. Auf der rechten Seite ist schematisch die unten liegende Dämmung sowie der darüber befindliche Fußbodenaufbau 20 in Form eines Estrichs 20 dargestellt, wobei sich der Fußbodenaufbau 20 über den Sicherungsflansch 11 ausbreitet und das Konvektorgehäuse 2 sicher umschließt und verankert. Analog setzt sich diese Konstruktion auch im linken Bereich des Unterflurkonvektors 1 fort, dies ist allerdings in Fig. 11 nicht dargestellt. Die Längsseitenwände 5a, 5b besitzen noch ihre ursprüngliche Höhe und die obersten Kanten 12, 12' überragen das Niveau des Fußbodenaufbaus 20 deutlich. Ziel ist es nun, das Niveau so anzugleichen, dass schlussendlich der Unterflurkonvektor 1 bündig mit dem Bodenbelag 21 bzw. der Oberfläche des Fußbodens abschließt. Dies lässt sich oft nicht im Vorfeld planen und fixieren, da dies unter anderem auch von der Ausgestaltung und Dicke des Gitters 7 und der Dicke des Parkettbodens bzw. Bodenbelags 21 abhängig ist. Daher ist es vorteilhaft, wenn man hier baustellenseitig flexibel ist und auf alle Eventualitäten reagieren kann und zu diesem Zweck die Höhe der Längsseitenwände 5a, 5b kurzfristig und einfach verringern kann.

Dies ist exemplarisch in Fig. 12 dargestellt, wobei hier schematisch eine sehr ähnliche Fußbodenkonstruktion, allerdings in einem weiter fortgeschrittenen Stadium dargestellt ist. Hier sind nämlich die Längsseitenwände 5a, 5b bereits durch einfaches Absägen abgelängt bzw. gekürzt und auf den obersten Kanten 12 sind Z-förmige Abschlussprofile 14 montiert. Wie einleitend beschrieben, schließt sich der nach außen erstreckende Flanschbereich der Abschlussprofile 14 oben an den Estrich 20 an und wird dort fixiert. Darüber befindet sich der schematisch angedeutete Bodenbelag 21 bzw. der Parkettboden. Nach innen zu bzw. auf den inneren Flanschleisten aufliegend ist schematisch das Gitterelement 7 angeordnet, das den Innenraum des Konvektorgehäuses 2 luftdurchlässig, aber trittsicher nach oben zu verschließt.

Die obersten Kanten 12 der gekürzten Längsseitenwände 5a, 5b befinden sich hier auf der gleichen Höhe wie die Oberseite des Fußbodenaufbaus 20. Abhängig von der konstruktiven Ausgestaltung des Abschlussprofils 14, des Gitterelements 7 und der Dicke und Anordnung des Fußbodenaufbaus 20 und des Bodenbelags 21 bestehen hier allerdings auch andere konstruktive Varianten. Bei all dem bleibt aber die einfache Kürzungsmöglichkeit der Höhe der Längsseitenwände 5a, 5b gleich.

Verfahrensmäßig wird dabei vorteilhafterweise so vorgegangen, dass das Blockelement 16 solange wie möglich, gegebenenfalls bis zum Schluss, im inneren Raum des Konvektorgehäuses 2 verbleibt und erst knapp vor der Montage der Abschlussprofile 14 oder knapp vor dem Einsetzen des Wärmeübertragers 3 und des Gehäuses 9 entfernt wird. Davor dient es sowohl als Lager- und Transportschutz, aber auch baustellenseitig als Trittschutz, insbesondere um ein Abbrechen der dünnen Längsseitenwände 5a, 5b zu vermeiden.

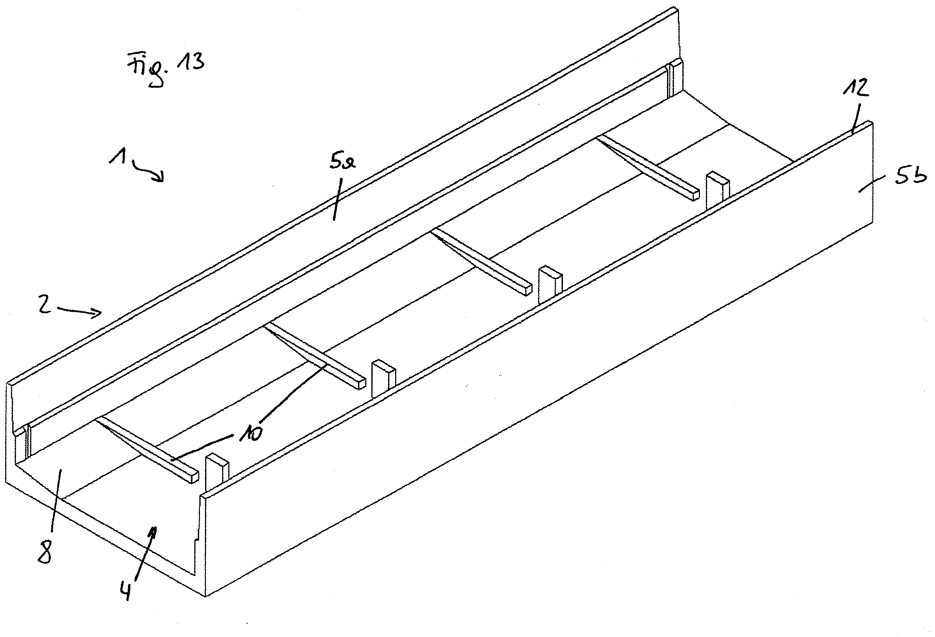

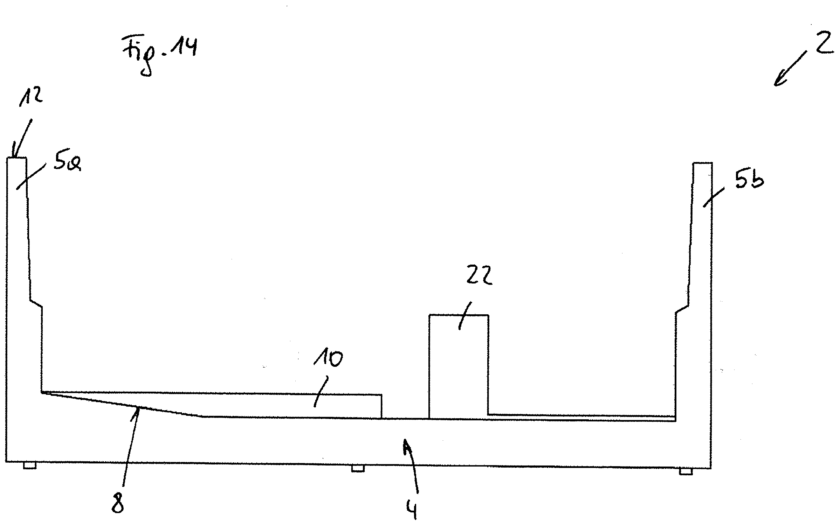

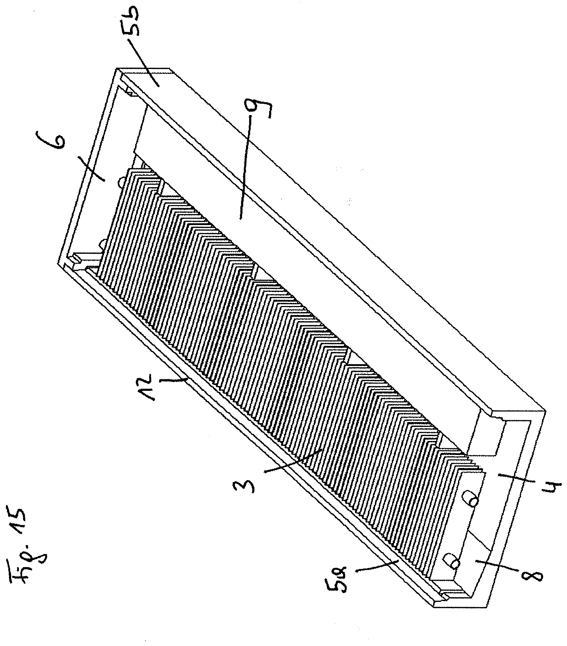

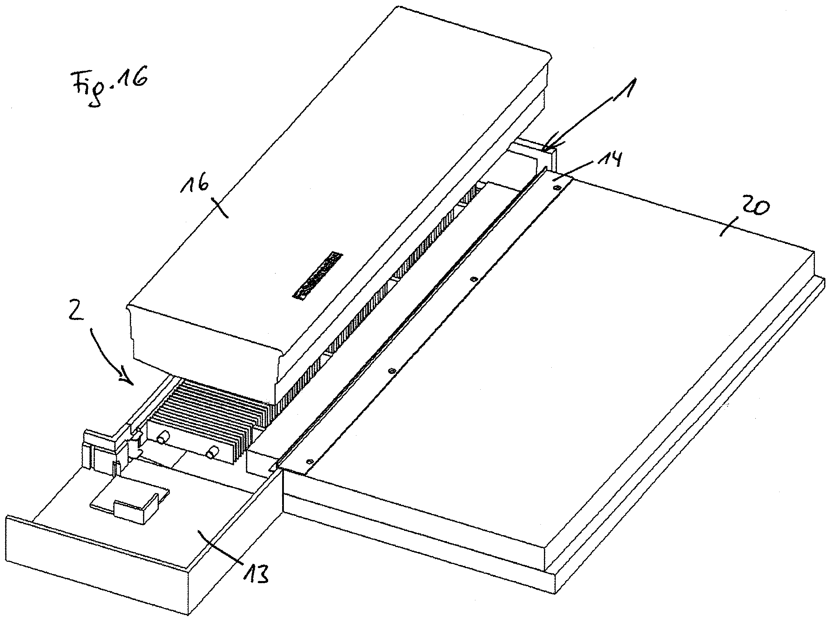

Die Fig. 13 bis 16 zeigen eine alternative Ausführungsform eines Unterflurkonvektors 1. Hierbei ist an den Außenseiten der Längsseitenwände 5a, b, kein länglicher Sicherungsflansch 11 angeformt bzw. ausgebildet, der sich über die gesamte Länge des Konvektorgehäuses 2 erstreckt. Das Konvektorgehäuse 2 wird in diesem Fall mit dem Untergrund, meist dem Rohfußboden verklebt.
Ansonsten gelten für Fig. 1, 2, 3 und 5 alle Erläuterungen zu den Fig. 1 bis 12 gleichermaßen, auch für eine Fußbodenkonstruktion mit einem Unterflurkonvektor 1 gemäß Fig. 13 bis 16. Hier ist der einzige Unterschied der, dass sich der Estrich bzw.

Fußbodenaufbau 20 nicht wie in Fig. 5, 6, 11 oder 12 dargestellt über den Sicherungsflansch 11 ausbreitet, sondern, dass der Estrich bzw. Fußbodenaufbau 20 seitlich an den Längsseitenwänden 5a, b ansteht, wobei der Unterflurkonvektor 1 an den Untergrund geklebt oder geschraubt wird.

## Patentansprüche

1. Unterflurkonvektor (1) mit einem Konvektorgehäuse (2), das im Betrieb vertieft in einen Fußbodenaufbau (20) einsetzbar ist, und einem im Inneren des Konvektorgehäuses (2) angeordneten Wärmeübertrager (3) zum Erwärmen oder Kühlen von Luft, wobei und das Konvektorgehäuse (2) im wesentlichen quader- kanal-, schalen- oder schachtförmig ist und eine Bodenfläche (4) sowie zwei zueinander parallele Längsseitenwände (5a, 5b) aufweist, und an seiner Oberseite durch ein luftdurchlässiges, vorzugsweise abnehmbares, Gitterelement bzw. einen Rost (7) abgedeckt ist, und dass das Konvektorgehäuse (2), zumindest umfassend die Bodenfläche (4) sowie die Längsseitenwände (5a, 5b), einstückig und einteilig ausgebildet ist, **dadurch gekennzeichnet, dass** das Konvektorgehäuse (2) aus geschäumtem Polymermaterial bzw. Polymerschaumstoff besteht.

2. Unterflurkonvektor (1) nach Anspruch 1, **dadurch gekennzeichnet, dass** zwei zueinander parallele, das Konvektorgehäuse (2) stirnseitig abschließende, Stirnseitenwände (6) vorgesehen sind, die reversibel einsetzbar bzw. entfernbar sind.

3. Unterflurkonvektor (1) nach einem der Ansprüche 1 bis 2, **dadurch gekennzeichnet, dass** die Bodenfläche (4) im Bereich unterhalb des Wärmeübertragers (3) einen nach außen zu der dem Wärmeübertrager (3) nahen Längsseitenwand (5a) hin ansteigend geneigten bzw. abgeschrägten Flächenbereich (8) aufweist.

4. Unterflurkonvektor (1) nach Anspruch 3, **dadurch gekennzeichnet, dass** sich der Flächenbereich (8) ausgehend von der dem Wärmeübertrager (3) nahen Längsseitenwand (5a) bis maximal 30 %, vorzugsweise in einen Bereich zwischen 10 und 25 %, der inneren Breite des Konvektorgehäuses (2) erstreckt,
und/oder dass der Flächenbereich (8) um einen Winkel von 5° bis 15° zur Bodenfläche (4) geneigt ist.

5. Unterflurkonvektor (1) nach einem der Ansprüche 1 bis 4, **dadurch gekennzeichnet, dass** in der Bodenfläche (4) im Bereich unterhalb des Wärmeübertragers (3) eine Anzahl von quer zu den Längsseitenwänden (5a, 5b) ausgerichteten Rippen (10) ausgebildet ist, auf denen der Wärmeübertrager (3) aufgesetzt ist bzw. aufliegt.

6. Unterflurkonvektor (1) nach Anspruch 5, **dadurch gekennzeichnet, dass** sich die Rippen (10) ausgehend von der dem Wärmeübertrager (3) nahen Längsseitenwand (5a) nicht über die gesamte innere Breite des Konvektorgehäuses (2) und bis insbesondere maximal 95 %, vorzugsweise in einen Bereich zwischen 40 und 70 %, der inneren Breite des Konvektorgehäuses (2) erstrecken und den abgeschrägten Flächenbereich (8) überragen.

7. Unterflurkonvektor (1) nach einem der Ansprüche 1 bis 6, **dadurch gekennzeichnet, dass** an den Außenseiten der Längsseitenwände (5a, 5b) in der Verlängerung der Bodenfläche (4) nach außen, jeweils ein länglicher Sicherungsflansch (11) ausgebildet bzw. angeformt ist oder dass die Außenseiten der Längsseitenwände (5a, 5b) eben und frei von herausragenden Elementen sind,
und/oder dass die der Bodenfläche (4) abgewendete Unterseite Strukturelemente (18) zum Ausgleich von Bodenunebenheiten, insbesondere Noppen, Streifen, Rippen etc, aufweist.

8. Unterflurkonvektor (1) nach einem der Ansprüche 1 bis 7, **dadurch gekennzeichnet, dass** an den obersten Kanten (12) der Längsseitenwände (5a, 5b) und/oder an den obersten Kanten (12') der Stirnseitenwände (6) und Abschlussprofile (14) mit nach innen und/oder nach außen vorstehenden Flanschleisten, vorzugsweise aus Metall, insbesondere zum Auflegen eines Gitterelements bzw. eines Rosts (7), vorgesehen sind, wobei die Abschlussprofile (14) vorzugsweise in Form eines Z-Profils ausgestaltet sind.

9. Unterflurkonvektor (1) nach einem der Ansprüche 1 bis 8, **dadurch gekennzeichnet, dass** die inneren Flächen der Längsseitenwände (5a, 5b) geringfügig abgeschrägt sind, vorzugsweise in einem Winkel von 0,5° bis 5°.

10. Unterflurkonvektor (1) nach einem der Ansprüche 1 bis 9, **dadurch gekennzeichnet, dass** an den Innenflächen der Längsseitenwände (5a, 5b) jeweils eine parallel zur Bodenfläche (4) verlaufende, und gegebenenfalls nach unten geneigte, Rastfläche (17) ausgebildet ist, oberhalb der die Dicke der Längsseitenwände (5a, 5b) um die Breite der Rastfläche (17) verringert ist.

11. Unterflurkonvektor (1) nach einem der Ansprüche 1 bis 10, **dadurch gekennzeichnet, dass** der Polymerschaumstoff ein Styrolpolymer-Partikelschaumstoff (EPS) oder ein extrudierter Polystyrol-Hartschaum (XPS) ist, und vorzugsweise eine Dichte von > 35 kg/m³ aufweist.

12. Unterflurkonvektor (1) nach einem der Ansprüche 1 bis 11, **dadurch gekennzeichnet, dass** im Inneren des Konvektorgehäuses (2) ein Gebläse (9) zur Ansaugung von Luft und/oder zum forcierten Einbringen von vom Wärmeübertrager (3) erwärmter oder gekühlter Luft in den Raum vorgesehen ist.

13. Konvektor-Anordnung umfassend eine Anzahl von nebeneinander, insbesondere stirnseitig aneinander, angeordneten Unterflurkonvektoren (1) gemäß einem der Ansprüche 1 bis 12.

14. Konvektor-Anordnung nach Anspruch 13, **dadurch gekennzeichnet, dass** zur stirnseitigen mechanischen Verbindung zweier Unterflurkonvektoren (1) gemäß einem der Ansprüche 1 bis 12, Verbindungselemente (15), vorzugsweise Einrastelemente oder Halteklammern, vorgesehen sind, die insbesondere in dafür in den Innenwandungen des Konvektorgehäuses (2) ausgebildete Ausnehmungen (19) einsetzbar sind.

15. Konvektor-Anordnung nach Anspruch 13 oder 14, **dadurch gekennzeichnet, dass** Eckverbindungselemente (13) vorgesehen sind, mit denen zwei Unterflurkonvektoren (1) gemäß einem der Ansprüche 1 bis 12, miteinander in einem, vorzugsweise rechten, Winkel stirnseitig verbindbar sind, wobei die Eckverbindungselemente (13) an ihren Stirnseiten die gleichen Querschnitte und Dimensionen wie die Konvektorgehäuse (2) besitzen.

16. Fußbodenkonstruktion umfassend einen Fußbodenaufbau (20), beispielsweise einen Estrich oder Unterbau, weiters einen Bodenbelag (21), beispielsweise einen Parkett, und zumindest einen Unterflurkonvektor (1) nach einem der Ansprüche 1 bis 12 oder eine Konvektor-Anordnung nach einem der Ansprüche 13 bis 15, wobei der zumindest eine Unterflurkonvektor (1) im Fußbodenaufbau (20) eingesetzt ist und wobei die obersten Kanten (12) der Längsseitenwände (5a, 5b) so abgelängt sind, dass der Unterflurkonvektor (1) bündig mit oder unterhalb der Oberfläche des Fußbodens bzw. des Bodenbelags (21) abschließt.

17. Verfahren zum Einbau eines Unterflurkonvektors (1) nach einem der Ansprüche 1 bis 12, insbesondere einer Konvektor-Anordnung nach einem der Ansprüche 13 bis 15, bzw. Verfahren zur Erstellung einer Fußbodenkonstruktion nach Anspruch 16, wobei nach dem Anordnen eines Unterflurkonvektors (1) nach einem der Ansprüche 1 bis 12 im Fußbodenaufbau (20) und vor dem Einbringen des Bodenbelags (21), die obersten Kanten (12) des Unterflurkonvektors (1) in der passenden Höhe so abgelängt werden, dass der Unterflurkonvektor (1) bündig mit oder unterhalb der Oberfläche des Fußbodens bzw. des Bodenbelags (21) abschließt, wobei danach vorteilhafterweise die Abschlussprofile (14) montiert werden.

## Claims

1. Underfloor convector (1) having a convector housing (2) which in operation can be set at a depth in a floor structure (20) and a heat exchanger (3) arranged in the interior of the convector housing (2) for warming or cooling air, wherein the convector housing (2) is substantially cuboidal, channel-shaped, shell-shaped or shaft-shaped and has a floor surface (4) as well as two longitudinal side walls (5a, 5b) parallel to one another, and is covered on its top side by an air-permeable, preferably removable, grating element or a grille (7), and that the convector housing (2) at least including the floor surface (4) and the longitudinal side walls (5a, 5b) is formed in one part and in one piece, **characterised in that** the convector housing (2) consists of foamed polymeric material or polymeric foam material.

2. Underfloor convector (1) according to claim 1, **characterised in that** two end face walls (6) parallel to one another, closing the convector housing (2) at the end face, are provided which can be reversibly set-in or removed.

3. Underfloor convector (1) according to any of claims 1 to 2, **characterised in that** surface (4) in the region below the heat exchanger (3) has a surface area (8) ascendingly inclined or sloped to the outside towards the longitudinal side wall (5a) near to the heat exchanger (3).

4. Underfloor convector (1) according to claim 3, **characterised in that** the surface area (8) starting from the longitudinal side wall (5a) near to the heat exchanger (3) extends up to maximum 30%, preferably in a region between 10 and 25%, of the inner width of the convector housing (2)
and/or that the surface area (8) is inclined at an angle of 5° to 15° to the floor surface (4).

5. Underfloor convector (1) according to any of claims 1 to 4, **characterised in that** in the floor surface (4) in the region below the heat exchanger (3) is formed a number of ribs (10) aligned perpendicularly to the longitudinal side walls (5a, 5b), on which ribs the heat exchanger (3) is set or rests.

6. Underfloor convector (1) according to claim 5, **characterised in that** the ribs (10) starting from the longitudinal side wall (5a) near to the heat exchanger (3) do not extend across the entire inner width of the convector housing (2) and extend up to particularly maximum 95%, preferably in a range between 40 and 70%, of the inner width of the convector housing (2) and protrude beyond the sloped surface area (8).

7. Underfloor convector (1) according to any of claims 1 to 6, **characterised in that** on the outer sides of the longitudinal side walls (5a, 5b) in the extension of the floor surface (4) to the outside is formed or shaped in each case an elongated safety flange (11) or that the outsides of the longitudinal side walls (5a, 5b) are flat and free of protruding elements,
and/or that the bottom side facing away from the floor surface (4) has structure elements (18) for compensating ground unevennesses, in particular nubs, strips, ribs etc.

8. Underfloor convector (1) according to any of claims 1 to 7, **characterised in that** on the uppermost edges (12) of the longitudinal side walls (5a, 5b) and/or on the uppermost edges (12') of the end face walls (6) and end profiles (14) are provided with flange bars protruding to the inside and/or to the outside, preferably made of metal, in particular for the laying-on of a grating element or a grille (7), wherein the end profiles (14) are designed preferably in the shape of a Z-profile.

9. Underfloor convector (1) according to any of claims 1 to 8, **characterised in that** the inner surfaces of the longitudinal side walls (5a, 5b) are slightly sloped, preferably at an angle from 0.5° to 5°.

10. Underfloor convector (1) according to any of claims 1 to 9, **characterised in that** on the inner surfaces of the longitudinal side walls (5a, 5b) is formed in each case one detent surface (17), extending parallel to the floor surface (4) and where appropriate sloped downwards, above which the thickness of the longitudinal side walls (5a, 5b) is reduced by the width of the detent surface (17).

11. Underfloor convector (1) according to any of claims 1 to 10, **characterised in that** the polymeric foam material is a styrene polymer particle foam material (EPS) or an extruded polystyrene rigid foam (XPS), and has preferably a density of >35 kg/m³.

12. Underfloor convector (1) according to any of claims 1 to 11, **characterised in that** in the interior of the convector housing (2) is provided a fan (9) for the suction of air and/or for the forced introduction of air, which has been warmed or cooled by the heat exchanger (3), into the room.

13. Convector arrangement comprising a number of underfloor convectors (1) according to any of claims 1 to 12 arranged next to each other, in particular end-to-end.

14. Convector arrangement according to claim 13, **characterised in that** for the end-to-end mechanical connection of two underfloor convectors (1) according to any of claims 1 to 12 are provided connecting elements (15), preferably detent elements or holding clamps, which in particular can be inserted into recesses (19) formed for this purpose in the inner walls of the convector housing (2).

15. Convector arrangement according to claim 13 or 14, **characterised in that** corner connecting elements (13) are provided with which two underfloor convectors (1) according to any of claims 1 to 12 can be connected with one another in an end-to-end manner preferably at right-angles, wherein the corner connecting elements (13) have at their end faces the same cross-sections and dimensions as the convector housing (2).

16. Floor construction comprising a floor structure (20) for example a floor screed or substructure, furthermore a floor covering (21), for example a parquet, and at least one underfloor convector (1) according to any of claims 1 to 12 or a convector arrangement according to any of claims 13 to 15, wherein the at least one underfloor convector (1) is set into the floor structure (20) and wherein the uppermost edges (12) of the longitudinal side walls (5a, 5b) are cut to size such that the underfloor convector (1) ends flush with or below the surface of the floor or of the floor covering (21).

17. Method for installing an underfloor convector (1) according to any of claims 1 to 12, in particular of a convector arrangement according to any of claims 13 to 15, or method for creating a floor construction according to claim 16, wherein after the arrangement of an underfloor convector (1) according to any of claims 1 to 12 in the floor structure (20) and prior to the introduction of the floor covering (21), the uppermost edges (12) of the underfloor convector (1) are cut to size at the appropriate height such that the underfloor convector (1) finishes flush with or below the surface of the floor or of the floor covering (21), wherein thereafter advantageously the end profiles (14) are mounted.

## Revendications

1. Convecteur sous plancher (1) avec une carcasse de convecteur (2) qui, lors du fonctionnement, peut être installée encastrée dans une structure de plancher (20), et avec un échangeur de chaleur (3) agencé à l'intérieur de la carcasse de convecteur (2) et destiné à réchauffer ou refroidir de l'air,
dans lequel la carcasse de convecteur (2) est globalement en forme de parallélépipède, de canal, de coque ou de puits et présente une surface de fond (4) ainsi que deux parois latérales longitudinales (5a, 5b) parallèles l'une à l'autre, et elle est couverte au niveau de sa partie supérieure par un élément formant treillis ou une grille (7) laissant passer l'air et de préférence pouvant être enlevé,
et dans lequel la carcasse de convecteur (2), comprenant au moins la surface de fond (4) ainsi que les parois latérales longitudinales (5a, 5b), est réalisée d'un seul tenant et d'une seule pièce,
**caractérisé en ce que** la carcasse de convecteur (2) est en une matière polymère mise sous forme de mousse ou en une mousse polymère.

2. Convecteur sous plancher (1) selon la revendication 1, **caractérisé en ce qu'**il est prévu deux parois latérales frontales (6) qui sont parallèles l'une à l'autre et ferment côté frontal la carcasse de convecteur (2) et qui peuvent être mises en place ou enlevées de manière réversible.

3. Convecteur sous plancher (1) selon l'une quelconque des revendications 1 à 2, **caractérisé en ce que** la surface de fond (4) présente dans la zone en dessous de l'échangeur de chaleur (3) une zone de surface (8) inclinée ou en biais de manière montante vers l'extérieur en direction de la paroi latérale longitudinale (5a) proche de l'échangeur de chaleur (3).

4. Convecteur sous plancher (1) selon la revendication 3, **caractérisé en ce que** la zone de surface (8) s'étend à partir de la paroi latérale longitudinale (5a) proche de l'échangeur de chaleur (3) au maximum jusqu'à 30 %, de préférence dans une plage entre 10 et 25 %, de la largeur intérieure de la carcasse de convecteur (2)
et/ou **en ce que** la zone de surface (8) est inclinée d'un angle de 5° à 15° par rapport à la surface de fond (4).

5. Convecteur sous plancher (1) selon l'une quelconque des revendications 1 à 4, **caractérisé en ce que**, dans la surface de fond (4), dans la zone au-dessous de l'échangeur de chaleur (3), il est formé un certain nombre de nervures (10) qui sont orientées transversalement par rapport aux parois latérales longitudinales (5a, 5b) et sur lesquelles est posé ou s'appuie l'échangeur de chaleur (3).

6. Convecteur sous plancher (1) selon la revendication 5, **caractérisé en ce que** les nervures (10) s'étendent à partir de la paroi latérale longitudinale (5a) proche de l'échangeur de chaleur (3) mais pas sur toute la largeur intérieure de la carcasse de convecteur (2) et notamment au maximum jusqu'à 95 %, de préférence dans une plage entre 40 et 70 %, de la largeur intérieure de la carcasse de convecteur (2) et elles dépassent de la zone de surface en biais (8).

7. Convecteur sous plancher (1) selon l'une quelconque des revendications 1 à 6, **caractérisé en ce qu'**une bride de sécurité (11) allongée est réalisée ou formée à chaque fois au niveau des côtés extérieurs des parois latérales longitudinales (5a, 5b) dans le prolongement de la surface de fond (4) vers l'extérieur ou **en ce que** les côtés extérieurs des parois latérales longitudinales (5a, 5b) sont plans et exempts d'éléments dépassant vers l'extérieur,
et/ou **en ce que** le côté inférieur éloigné de la surface de fond (4) présente des éléments structurels (18) afin de compenser des irrégularités du sol, en particulier des noeuds, des bandes, des nervures, etc.

8. Convecteur sous plancher (1) selon l'une quelconque des revendications 1 à 7, **caractérisé en ce que**, au niveau des plus hautes arêtes (12) des parois latérales longitudinales (5a, 5b) et/ou au niveau des plus hautes arêtes (12') des parois latérales frontales (6), des profilés de bordure (14) avec des rebords de collerette dépassant vers l'intérieur et/ou vers l'extérieur, de préférence en métal, sont prévus notamment pour poser un élément formant treillis ou une grille (7), lesquels profilés de bordure (14) sont réalisés de préférence sous la forme d'un profilé en Z.

9. Convecteur sous plancher (1) selon l'une quelconque des revendications 1 à 8, **caractérisé en ce que** les surfaces intérieures des parois latérales longitudinales (5a, 5b) sont légèrement biseautées, de préférence avec un angle de 0,5° à 5°.

10. Convecteur sous plancher (1) selon l'une quelconque des revendications 1 à 9, **caractérisé en ce que**, au niveau des surfaces intérieures des parois latérales longitudinales (5a, 5b), est réalisée à chaque fois une surface d'arrêt (17) qui s'étend parallèlement à la surface de fond (4), et le cas échéant inclinée vers le bas, et au-dessus de laquelle l'épaisseur des parois latérales longitudinales (5a, 5b) est réduite de la largeur de la surface d'arrêt (17).

11. Convecteur sous plancher (1) selon l'une quelconque des revendications 1 à 10, **caractérisé en ce que** la mousse polymère est une mousse particulaire de polymère de styrène (EPS) ou une mousse dure de polystyrène extrudé (XPS), et présente de préférence une densité > 35 kg/m³.

12. Convecteur sous plancher (1) selon l'une quelconque des revendications 1 à 11, **caractérisé en ce que**, à l'intérieur de la carcasse de convecteur (2), il est prévu un ventilateur (9) pour l'aspiration d'air et/ou pour l'amenée forcée d'air, réchauffé ou refroidi par l'échangeur de chaleur (3), dans la pièce.

13. Agencement de convecteurs comprenant un certain nombre de convecteurs sous plancher (1) agencés les uns à côté des autres, en particulier frontalement les uns contre les autres, selon l'une quelconque des revendications 1 à 12.

14. Agencement de convecteurs selon la revendication 13, **caractérisé en ce que**, pour la liaison mécanique côté frontal de deux convecteurs sous plancher (1) selon l'une quelconque des revendications 1 à 12, il est prévu des éléments de liaison (15), de préférence des éléments d'enclenchement ou des étriers de retenue, qui peuvent être placés en particulier dans des évidements (19) réalisés à cet effet dans les parois intérieures de la carcasse de convecteur (2).

15. Agencement de convecteurs selon la revendication 13 ou 14, **caractérisé en ce qu'**il est prévu des éléments de liaison d'angle (13) avec lesquels deux convecteurs sous plancher (1) selon l'une quelconque des revendications 1 à 12 peuvent être reliés l'une à l'autre côté frontal selon un angle, de préférence droit, lesquels éléments de liaison d'angle (13) ont au niveau de leurs côtés frontaux les mêmes sections transversales et dimensions que la carcasse de convecteur (2).

16. Construction de plancher comprenant une structure de plancher (20), par exemple une chape ou une fondation, de plus un revêtement de sol (21), par exemple un parquet, et au moins un convecteur sous plancher (1) selon l'une quelconque des revendications 1 à 12 ou un agencement de convecteurs selon l'une quelconque des revendications 13 à 15, dans lequel l'au moins un convecteur sous plancher (1) est installé dans la structure de plancher (20) et dans lequel les plus hautes arêtes (12) des parois latérales longitudinales (5a, 5b) sont coupées à une longueur telle que le convecteur sous plancher (1) se termine à fleur ou en dessous de la surface du plancher ou du revêtement de sol (21).

17. Procédé d'intégration d'un convecteur sous plancher (1) selon l'une quelconque des revendications 1 à 12, en particulier d'un agencement de convecteurs selon l'une quelconque des revendications 13 à 15 ou procédé d'élaboration d'une construction de plancher selon la revendication 16, dans lequel, après l'agencement d'un convecteur sous plancher (1) selon l'une quelconque des revendications 1 à 12 dans la structure de plancher (20) et avant la pose du revêtement de sol (21), les plus hautes arêtes (12) du convecteur sous plancher (1) sont coupées à une hauteur ajustée telle que le convecteur sous plancher (1) se termine à fleur ou en dessous de la surface du plancher ou du revêtement de sol (21), dans lequel les profilés de bordure (14) sont avantageusement montés après.
